# NEW EUROPEAN PATENT SPECIFICATION

(11) **EP 3 065 603 B2**
(45) Date of publication and mention of the opposition decision: **20.05.2020**
(45) Mention of the grant of the patent: 19.07.2017
(21) Application number: 14806728.3
(22) Date of filing: 29.10.2014
(51) Int. Cl.: A47J 31/06, B65D 85/804

(54) **CAPSULE AND SYSTEM FOR MAKING BEVERAGES**
KAPSEL UND SYSTEM ZUR HERSTELLUNG VON GETRÄNKEN
CAPSULE ET SYSTÈME DE FABRICATION DE BOISSONS

(30) Priority: 08.11.2013 IT VR20130243
(43) Date of publication of application: 14.09.2016
(73) Proprietor: Caffitaly System S.P.A., 40041 Gaggio Montano (BO) (IT)
(72) Inventor: ACCURSI, Giovanni, 40041 Gaggio Montano (Bologna) (IT)
(74) Representative: Ponchiroli, Simone
(86) International application number: PCT/IB2014/065683
(87) International publication number: WO 2015/075584

(56) References cited:
- EP-A1- 2 287 090
- EP-A1- 2 489 609
- WO-A1-2010/137954
- WO-A1-2012/118367
- WO-A1-2012/120459
- WO-A1-2013/046014
- WO-A1-2013/136209
- WO-A1-2014/184652
- WO-A2-2007/113100
- WO-A2-2010/084475
- WO-A2-2014/012783

## Description

This invention relates to a capsule for making beverages and a system for making beverages which comprises and uses that capsule.

In particular, this invention is for a capsule and a system for making beverages in which the capsule contains a powdered food substance (for example coffee powder) which can be extracted by passing water through it to make the beverage (for example coffee).

In more detail, this invention is intended for those system for making beverages in which the capsule is inserted in a housing made in a capsule holder which is then closed by a contact element by means of a relative movement between the capsule holder and the contact element. With the housing closed, the edge of the capsule holder clamps between itself and the contact element a projecting perimetric edge of the capsule in such a way as to obtain a watertight seal both between the capsule holder and the perimetric edge, and between the perimetric edge and the contact element. Moreover, this invention is intended for those system in which the injection of water into the capsule occurs through a lower wall of a cup-shaped body of the capsule which contains the powder and which is closed at the top by a lid made of material that is less strong, and which is usually intended to tear against the contact element under the effect of the pressure generated by the water inside the capsule.

This invention is a further improvement of the solution described in patent application WO 2013/136209, which in turn was an important innovation compared with the prior art solutions described for example in patents EP 1816936 B1, EP 1700548 B1, EP 1654966 B1, EP 1816935 B1 and EP 1702543 B1.

In fact, whilst the previous patents saw the watertight seal created between the capsule holder and the capsule by means of axial compression of the capsule by the capsule holder, patent application WO 2013/136209 relates to a solution in which the seal is obtained in a direction transversal the axis of the capsule. That solution is an optimum alternative to compression seals also in those cases in which the edge of the capsule holder is indented or ruined.

The main disadvantage of this solution is that during production of the various elements (capsule and capsule holder) it requires a high level of precision in order to be able to guarantee a perfect seal in all circumstances. However, that may even not be enough if the capsules are to be used in machines previously put on the market and not intended specifically for such capsules. In fact, in that case relatively wide construction tolerances may result in imperfect coupling between the capsule and the sealing edge of the capsule holder.

In this context, the technical purpose which forms the basis of this invention is to provide a capsule and a system for making beverages which overcome the above-mentioned disadvantages.

In particular, the technical purpose of this invention is to provide a capsule and a system for making beverages of the type described above, which allow the creation of an optimum watertight seal in any circumstances.

The technical purpose specified and the aims indicated are substantially achieved by a capsule and a system for making beverages as described in the appended claims.

Further features and the advantages of this invention are more apparent in the detailed description of several preferred, non-limiting embodiments of a capsule and a system for making beverages illustrated in the accompanying drawings, in which:
- Figure 1 is an axial section of a cup-shaped body of a capsule in accordance with this invention;
- Figure 2 is an enlarged view of the detail II from Figure 1;
- Figure 3 illustrates an alternative embodiment of the detail from Figure 2;
- Figure 4 is an axial section of a system according to this invention, in an intermediate configuration;
- Figure 5 is an enlarged view of the detail V from Figure 4;
- Figure 6 is an axial section of the system of Figure 4 in a closed configuration; and
- Figure 7 is an enlarged view of the detail VII from Figure 6.

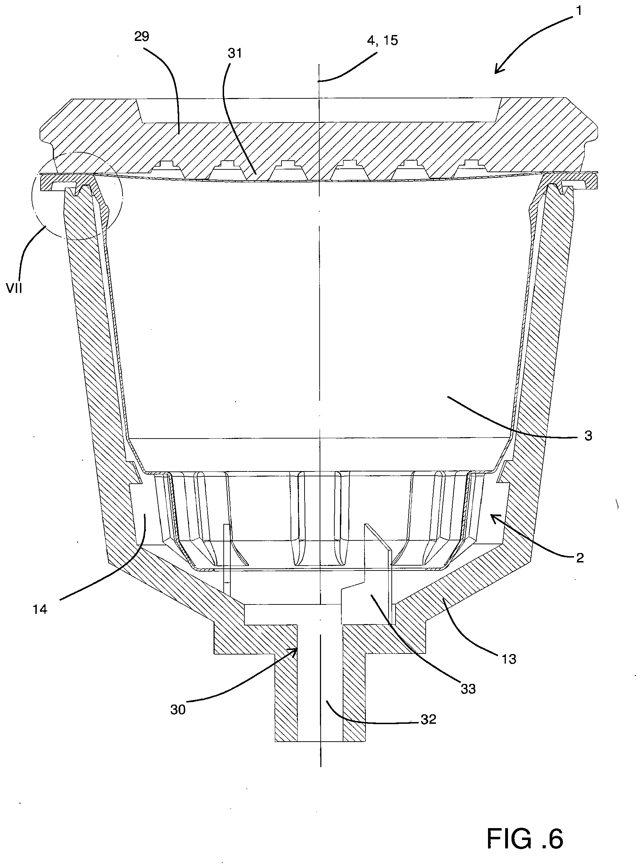

It should be noticed that for greater clarity, in the accompanying drawings on one hand several lines are not shown which refer to elements that are in the background relative to the cross-section plane (such as the annular elements extending around the axis for the capsule holder), and on the other hand, in Figure 6, the parts intended to interfere during operation are shown superposed.

With reference to the accompanying drawings, the numeral 1 denotes in its entirety a system for making beverages according to this invention.

The system 1 according to this invention comprises first a capsule 2, which is even in itself the subject matter of this invention, and which contains at least one powdered food substance (for example coffee powder - not illustrated in the accompanying drawings) which can be extracted by passing pressurised water through it to make a beverage (for example coffee). However, in the context of this invention, the term powdered food substance refers to any substance which can be extracted by infusion or which is soluble, for example coffee, tea, infusions, soups, etc.

Similarly to the prior art capsules, even that which is the subject matter of this invention comprises a substantially cup-shaped body 3 having a first central axis 4, said body in turn comprising a lower portion 5, a lateral wall 6 and a perimetric edge 7. Advantageously, at least the cup-shaped body 3 of the capsule 2 is substantially symmetrical relative to the first central axis 4.

It should be noticed that in the context of this description, terms such as "lower" and "upper" shall be understood with reference to a positioning of the containment body similar to that of a cup, not with reference to the method for use of the capsule (in fact, the capsule is also advantageously usable with the first central axis positioned substantially horizontally).

The lower portion 5, which may have any form suitable for the purpose (solid wall, pierced wall, single piece, two or more pieces which are joined together, etc.), extends mainly transversally to the first central axis 4, whilst the lateral wall 6 extends from the lower portion 5 and has a main line of extension parallel with the first central axis 4 (even if its overall shape corresponds to that of two or more truncated cones superposed and with a radius increasing away from the lower portion 5).

The perimetric edge 7 is connected to the side of the lateral wall 6 opposite to the lower portion 5, and projects outwards from the lateral wall 6, advantageously in a plane perpendicular to the first central axis 4.

Inside the cup-shaped body 3, in addition to one or more powdered food substances, according to requirements there may be other elements such as filers, panels, etc., not illustrated in the accompanying drawings, since they are of the known type or known to technicians in the field.

A lid 8 is associated, advantageously by gluing or sealing, on top of the perimetric edge 7, to close the top of the cup-shaped body 3.

The cup-shaped body 3 of the capsule 2 may be made of various materials such as plastic materials, for example by injection moulding or thermoforming, or metals, whilst the lid 8 may be made for example of an aluminium film, a plastic film, or a multi-layer film.

In a way similar to what is indicated at least in some embodiments of patent application WO 2013/136209, in this invention too, at the perimetric edge 7 but on a side opposite to that with which the lid 8 is associated, the capsule 2 comprises a projecting annular tooth 9 which, in use, guarantees the watertight seal between the capsule 2 and the capsule holder 13 (as indicated below). Advantageously, the projecting annular tooth 9 is obtained in one piece with the perimetric edge 7.

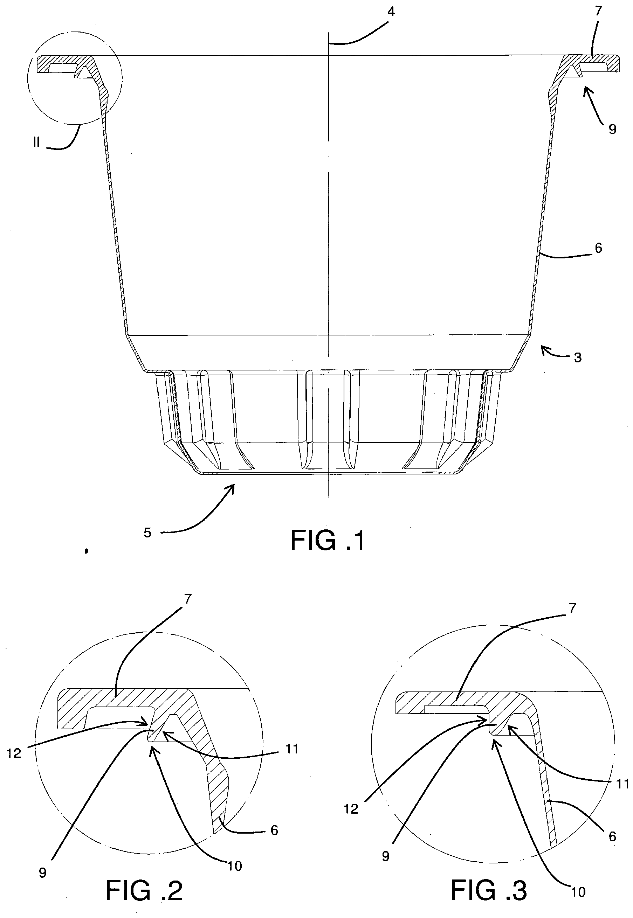

On the surface of the projecting annular tooth 9 (Figures 2 and 3) there are at least three portions annularly arranged relative to the first central axis 4, consisting of a tip portion 10, a first inner lateral face 11 at least partly facing towards the first central axis 4 and a first outer lateral face 12 at least partly facing outwards relative to the first central axis 4. The two first lateral faces 11, 12 are positioned on opposite sides of the tip portion 10.

According to a first innovative aspect of this invention, the projecting annular tooth 9 is at least partly deformable relative to the first central axis 4, in such a way that its tip portion 10 can vary its distance from the first central axis 4. Moreover, advantageously, the projecting annular tooth 9 is elastically deformable (at least within a certain predetermined deformation limit).

Depending on the embodiments, it may be the case that either the projecting annular tooth 9 is deformable at least in such a way that the tip portion 10 moves towards the first central axis 4 (as in the case illustrated) or it is deformable at least in such a way that the tip portion 10 moves away from the first central axis 4 (solution not illustrated). However, in most cases the projecting annular tooth 9 will be deformable in such a way that the tip portion 10 can move both towards and away from the first central axis 4, even if, as described in more detail below, mobility towards that axis may be preferable to guarantee an optimum seal.

According to a second inventive aspect of this invention, to facilitate the deformability of the projecting annular tooth 9, in a radial section relative to the central axis and going away from the perimetric edge 7, the first outer lateral face 12 at least partly extends diverging relative to the first central axis 4 (Figure 2). In fact, according to this invention, in a radial section relative to the central axis and going away from the perimetric edge 7, the first outer lateral face 12 must not be converging towards the first central axis 4.

Moreover, in the preferred embodiments, to further facilitate the deformability of the projecting annular tooth 9, the projecting annular tooth 9 has, again in a radial section relative to the central axis, an elongate shape and a thickness which decreases slightly towards the tip portion 10. Advantageously, in particular, the maximum thickness is less than half of the length of the projecting annular tooth 9 (measured along its length extending from the perimetric edge 7 to the tip portion 10).

Specifically, the first inner lateral face 11 at least partly extends, in a radial section relative to the central axis and going away from the perimetric edge 7, in such a way that it is diverging relative to the first central axis 4. Moreover, the first outer lateral face 12 extends parallel with or diverging relative to the first central axis 4, at least at a part of it adjacent to the tip portion 10, but advantageously along substantially its entire length.

Preferably, in a radial section relative to the first central axis 4, both the first inner lateral face 11 and the first outer lateral face 12 extend substantially straight, along respective straight lines which form acute angles with the first central axis 4, and which, preferably, converge slightly with one another towards the tip portion 10.

In addition to the capsule 2 described above, the system 1 for making beverages according to this invention comprises at least one capsule holder 13 which forms a housing 14 inside it for accommodating the capsule 2, having a second central axis 15. The housing 14 and the capsule holder 13 are also advantageously at least mainly symmetrical relative to the second central axis 15.

The capsule holder 13 also comprises an infeed opening 16 through which the capsule 2 can be inserted in the housing 14, and which is delimited at its perimeter by an annular edge 17 extending around the second central axis 15. According to this invention, the annular edge 17 respectively comprises a projecting annular element 18 and/or an annular seat 19 which are intended to interact with the projecting annular tooth 9. The annular edge 17 also comprises at least a second lateral face 20 made on the surface respectively of the projecting annular element 18 and/or of the annular seat 19. The second lateral face 20 is mainly facing outwards relative to the second central axis 15 and is designed to in use interact with the first inner lateral face 11 to guarantee the watertight seal.

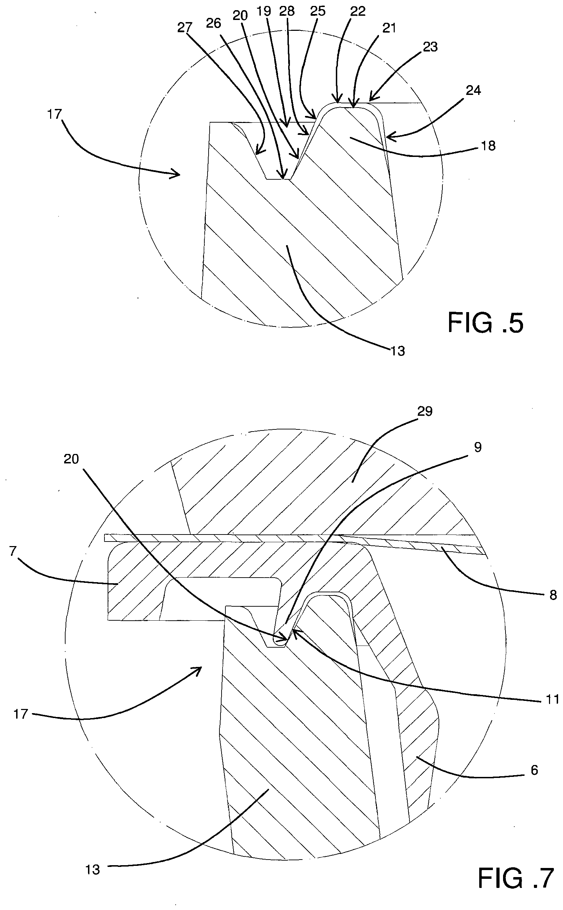

In fact, the capsule holder 13 and capsule 2 can adopt a sealed configuration in which the first central axis 4 and the second central axis 15 substantially coincide, and in which the annular edge 17 is in contact with said capsule 2 and is coupled to it with a watertight seal. Moreover, in that sealed configuration the second lateral face 20 is in sealed contact with the first inner lateral face 11 and the projecting annular tooth 9 is deformed relative to the first central axis 4 by the action applied by the capsule holder 13 by means of the second lateral face 20 on the first inner lateral face 11 (Figure 7). In particular, the tip portion 10 of the projecting annular tooth 9 has varied its distance from the first central axis 4 due to the deforming action applied by the capsule holder 13.

Therefore, in accordance with this invention, the watertight seal is not created by axial compression, but instead by lateral coupling. Therefore, the watertight seal is even guaranteed when, for example, the annular edge 17 of the capsule holder 13 has a projecting annular element 18 surface with indentations (as shown in Figure 5 where the projecting annular element is shown in a section at a hollow 21 of the indentations and where the peak 22 of the indentations is shown in the background; it should be noticed that, as shown, the indentations may also affect the sides of the projecting annular element 18) and the capsule 2 is not provided with resilient sealing members unlike in the prior art patents listed above. Moreover, in this way the watertight seal is also guaranteed in cases in which the annular edge 17 is ruined, for example by wear, and therefore the axial sealed coupling can no longer be guaranteed.

In general, on the surface of the projecting annular element 18 (if present) there are advantageously three portions consisting of a top portion 23, a first inner lateral portion 24 at least partly facing towards the second central axis 15 and a first outer lateral portion 25 at least partly facing outwards relative to the second central axis 15 (Figure 5). The two first lateral portions 24, 25 are positioned laterally on opposite sides of the top portion 23.

Similarly, on the surface of the annular seat 19 (if present) there are three portions consisting of a bottom portion 26, a second outer lateral portion 27 at least partly facing towards the second central axis 15 and a second inner lateral portion 28 at least partly facing outwards relative to the second central axis 15. The two second lateral portions 27, 28 are positioned laterally on opposite sides of the bottom portion 26.

In the preferred embodiment, the annular edge 17 comprises both the projecting annular element 18 and the annular seat 19. In a radial section relative to the second central axis 15, they are side by side (with the projecting annular element 18 closer to the second central axis 15) and the surface of one constitutes the continuation of the other at the shared second lateral face 20. In fact, the second inner lateral portion 28 of the annular groove corresponds to the first outer lateral portion 25 of the projecting annular element 18.

Depending on the cases, in general, the second lateral face 20 may comprise, correspond to, or be constituted of, respectively the first outer lateral portion 25 and/or the second inner lateral portion 28.

In the embodiment illustrated in which, in a radial section relative to the first central axis 4, the first inner lateral face 11 of the projecting annular tooth 9 of the capsule 2 extends substantially straight, along a first straight line forming a first acute angle with the first central axis 4, the second lateral face 20 extends substantially straight, along a second straight line forming a second acute angle with the second central axis 15, and the first acute angle is greater than the second acute angle. However, advantageously the first acute angle is greater than the second acute angle by no more than 10 degrees. Thanks to the different angles of the two lateral faces, in the sealed configuration (Figure 7) the capsule holder 13 causes deformation of the projecting annular tooth 9 and movement of the tip portion 10 towards the first central axis 4, with consequent pressing of the first inner lateral face 11 (and in particular of its part closest to the tip portion 10) onto the second lateral face 20, in this way increasing the watertight seal.

However, in other embodiments there may be a different operating method, where the first acute angle is less than the second acute angle, advantageously by no more than 10 degrees.

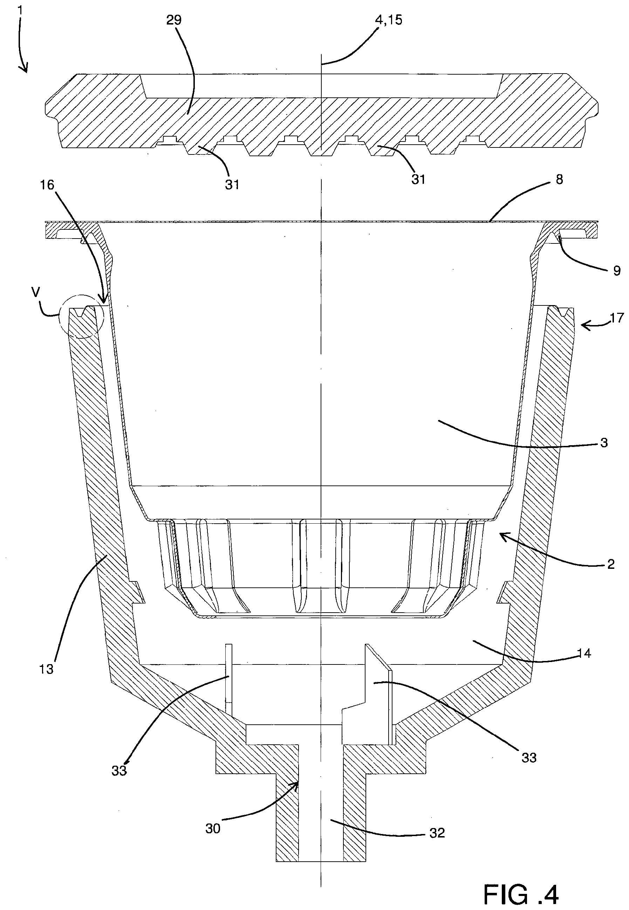

In addition to the capsule 2 and the capsule holder 13 the system 1 comprises, in the known way, a contact element 29 on which, in the sealed configuration, the lid 8 of the capsule 2 can rest at least at the perimetric edge 7. In particular, in the embodiment illustrated, the contact element 29 also closes the top of the housing 14 formed by the capsule holder 13, or allows access to the housing. In fact, at least one of either the capsule holder 13 or the contact element 29 is movable relative to the other, between an open configuration (not illustrated) in which they allow insertion of the capsule 2 in the housing 14 through the infeed opening 16, and a closed configuration (Figure 6) in which, with the capsule holder 13 and the capsule 2 in the sealed configuration, between them they close the perimetric edge 7 of the capsule 2 to form a watertight seal at least also between the perimetric edge 7 and the contact element 29. Figure 4 is a schematic illustration of an intermediate configuration between the open configuration and the closed configuration. When the capsule 2 is inserted in the housing 14 and the capsule holder 13 and contact element 29 are in the closed configuration, the capsule 2 and the capsule holder 2 are in the relative sealed configuration.

According to this invention it is also the case that during the coupling the annular edge 17 of the capsule holder 13 may cause further deformations in the capsule 2 in addition to that of the projecting annular tooth 9 with the movement of its tip portion 10. In fact, the capsule 2 may for example be made of plastic or metal material which is more yielding than that of the capsule holder 13, and in the sealed configuration, the projecting annular tooth 9 may for example even be elastically or permanently deformed at least at one of the respective first lateral faces 11, 12, just as the capsule holder 13 may also partly deform the lateral wall 6 or the perimetric edge 7 of the capsule 2 (Figure 7).

The system 1 also comprises injection means 30 mounted in the capsule holder 13 for in use injecting pressurised water into the capsule 2 through the lower portion 5, as well as collecting means associated with the contact element 29 for in use collecting the beverage dispensed through the lid 8 of the capsule 2.

The collecting means comprise at least one collecting duct (not illustrated) for conveying and collecting the beverage which is dispensed through the lid 8 of the capsule 2 and for carrying it towards the outside of the system 1 at a drop point. Advantageously, they are associated with the contact element 29 and in particular the collecting duct is at least partly made in the contact element 29 itself. Therefore, in the closed configuration, the watertight seal between the capsule 2 and the contact element 29 allows the collecting means to collect substantially all of the beverage dispensed through the lid 8 of the capsule 2. The beverage may be dispensed through the lid 8 of the capsule 2 in various ways (of the known type). For example, if the lid 8 of the capsule 2 is previously pierced and comprises one or more through holes, the beverage is dispensed through the holes. If, in contrast, as in the embodiment illustrated, the lid 8 consists for example of a breakable metal sheet, then the contact element 29 will advantageously comprise projecting elements 31 against which the lid 8 can tear as the pressure inside the capsule 2 increases due to the injection of water by the injection means 30.

The latter comprise one or more injecting pipes 32 which allow water to be injected into the capsule 2 through the lower portion 5 of the capsule 2 itself. Water is injected when the capsule 2 and the capsule holder 13 are in the sealed configuration, in such a way that water does not come out of the capsule holder 13.

In a first embodiment not illustrated, the lower portion 5 of the capsule 2 comprises previously made holes for the entry of water into the capsule 2. In this way, the simple supply of pressurised water into the capsule holder 13, through the injecting pipe, allows that water to pass into the capsule 2.

In contrast, in a second preferred embodiment, the lower portion 5 of the capsule 2 is sealed and only allows the water to enter the capsule 2 after it has been pierced or torn. Therefore, advantageously, as in the case of the embodiment illustrated, the injection means 30 comprise, in the known way, blades 33 or the like, preferably fixed to the capsule holder 13, designed to tear or pierce the lower portion 5 of the capsule 2 so as to create at least one passage to allow the entry of the water into the capsule 2.

The blades 33 or the like may be hollow and inside them may form part of the injecting pipe which allows water to be injected into the capsule 2 through the tear made by the blades 33. In contrast, in the preferred embodiment illustrated, the injection means 30 comprise blades 33 which allow cutting (tearing) of the lower portion 5 of the capsule 2 and the water is simply supplied into the capsule holder 13 through an injecting pipe 32. In this embodiment tearing takes place at least when the capsule 2 is completely inserted in the housing 14. Advantageously, the contact between the injection means 30 (and in particular the blades 33) and the lower portion 5 of the capsule 2, and the tearing action, occur, in the known way, due to the relative movement between the capsule 2 and the injection means 30 which, as already indicated, are advantageously fixed to the capsule holder 13. In use, in the relative movement between the contact element 29 and the capsule holder 13, the capsule holder 13 pushes the capsule 2 towards the contact element 29 until the lid 8 of the capsule 2, at least at the perimetric edge 7, makes impact against the contact element 29 and at that point, during achievement of the closed configuration or at the closed configuration, the injection means 30 and in particular the blades 33, pierce the lower portion 5 of the capsule 2.

In fact, in use, the capsule 2 is inserted in the housing 14, made inside the capsule holder 13, through the infeed opening 16 delimited by the annular edge 17 when the contact element 29 and the capsule holder 13 are in the open configuration. The subsequent relative movement between the capsule holder 13 and the contact element 29 towards the closed configuration causes the lid 8 of the capsule 2 to make impact against the contact element 29 at least at the perimetric edge 7 of the capsule 2. Moreover, movement of the capsule holder 13 towards the contact element 29 causes the closed configuration to be reached and the passage of the injection means 30 through the lower portion 5 into the capsule 2 (that is to say, tearing of the lower portion 5 of the capsule 2 by the blades 33). Advantageously, in the closed configuration the watertight sealed coupling is created between the capsule 2 and the capsule holder 13, at the annular edge 17 of the capsule holder 13, and between the capsule 2 and the contact element 29, at the zone of contact between the lid 8 of the capsule 2 and the contact element 29 (which advantageously occurs at least at the portion of the lid 8 which is in contact with the perimetric edge 7 of the capsule 2). Therefore, the perimetric edge 7 of the capsule 2 is advantageously clamped between the contact element 29 and the capsule holder 13. However, as already indicated, advantageously the sealed coupling between the capsule 2 and the capsule holder 13 occurs at the first inner lateral face 11 and the second lateral face 20 and after deformation of the projecting annular tooth 9.

This invention brings important advantages.

In particular, thanks to this invention it was possible to make a capsule and a system for making beverages which allow an optimum watertight seal to be created in any circumstances without the need for excessive attention to the construction tolerances of the individual parts.

Finally, it should be noticed that this invention is relatively easy to produce and that even the cost linked to implementing the invention is not very high.

The invention described above may be modified and adapted in several ways without thereby departing from the scope of the inventive concept.

Moreover, all details of the invention may be substituted with other technically equivalent elements and the materials used, as well as the shapes and dimensions of the various components, may vary according to requirements.

## Claims

1. A capsule for making beverages, containing at least one powdered food substance which can be extracted by passing pressurised water through it to make a beverage, said capsule (2) comprising:
a substantially cup-shaped body (3) having a first central axis (4), said body (3) comprising a lower portion (5), a lateral wall (6) extending from the lower portion (5), and a perimetric edge (7) connected to a side of the lateral wall (6) opposite to the lower portion (5) and projecting outwards from the lateral wall (6); and
a lid (8) associated with said perimetric edge (7) for closing the top of the cup-shaped body (3);
at the perimetric edge (7), on a side opposite to that where the lid (8) is associated, there being a projecting annular tooth (9) on whose surface there are at least three portions annularly arranged relative to the first central axis (4), said at least three portions consisting of a tip portion (10), a first inner lateral face (11) at least partly facing towards the first central axis (4) and a first outer lateral face (12) at least partly facing outwards relative to the first central axis (4), the two first lateral faces (11), (12) being positioned on opposite sides of the tip portion (10);
wherein the projecting annular tooth (9) is at least partly deformable relative to the first central axis (4) in such a way that the tip portion (10) may vary its distance from the first central axis (4), and wherein, in a radial section relative to the central axis and going away from the perimetric edge (7), the first inner lateral face (11) extends at least partly diverging relative to the first central axis (4);
**characterized in that** the first outer lateral face (12) extends, in a radial section relative to the central axis and going away from the perimetric edge (7), at least partly diverging relative to the first central axis (4) for facilitating the deformability of the projecting annular tooth (9) and the consequent movement of the tip portion (10) relative to the first central axis (4) .

2. The capsule according to claim 1, **characterised in that** said first outer lateral face (12) extends either parallel with the first central axis (4) or diverging relative to the first central axis (4) going away from the perimetric edge (7), at least at a part of it which is adjacent to the tip portion (10).

3. The capsule according to claim 1 or 2, **characterised in that the** projecting annular tooth (9) is at least partly elastically deformable.

4. The capsule according to any one of the preceding claims, **characterised in that,** in a radial section relative to the central axis, the projecting annular tooth (9) has an elongate shape and a maximum thickness which is less than half its own length.

5. The capsule according to claim 1, **characterised in that,** in a radial section relative to the central axis and going away from the perimetric edge (7), the first outer lateral face (12) extends at least partly diverging relative to the first central axis (4).

6. The capsule according to claim 5, **characterised in that,** in a radial section relative to the first central axis (4), both the first inner lateral face (11) and the first outer lateral face (12) extend substantially straight, along respective straight lines which form acute angles with the first central axis (4).

7. The capsule according to claim 6, **characterised in that** said respective straight lines converge with one another towards the tip portion (10).

8. The capsule according to any one of the preceding claims, **characterised in that** the projecting annular tooth (9) is at least partly deformable relative to the first central axis (4) in such a way that the tip portion (10) can move towards the first central axis (4).

9. A system for making beverages comprising:
a capsule (2) according to any one of the preceding claims;
a capsule holder (13) forming a housing (14) inside it for accommodating the capsule (2) and having a second central axis (15), said capsule holder (13) comprising an infeed opening (16) through which the capsule (2) can be inserted in said housing (14), said infeed opening (16) being delimited at its perimeter by an annular edge (17) of the capsule holder (13) comprising a projecting annular element (18) and/or respectively an annular seat (19), respectively the projecting annular element (18) and/or the annular seat (19) in turn comprising at least a second lateral face (20) mainly facing outwards relative to the second central axis (15);
injection means (30) mounted in the capsule holder (13) for in use injecting pressurised water into the capsule (2) through the lower portion (5); collecting means for in use collecting the beverage dispensed through the lid (8) of the capsule (2);
said capsule holder (13) and said capsule (2) being able to adopt a sealed configuration in which the first central axis (4) and the second central axis (15) substantially coincide and in which said annular edge (17) is in contact with said capsule (2) and is coupled to it with a watertight seal;
in the sealed configuration the second lateral face (20) being in sealed contact with the first inner lateral face (11) and the projecting annular tooth (9) being deformed relative to the first central axis (4) by an action applied by the capsule holder (13) by means of the second lateral face (20) on the first inner lateral face (11), in such a way that the tip portion (10) has varied its distance from the first central axis (4).

10. The system according to claim 9, respectively **characterised in that** on the surface of said projecting annular element (18) there are three portions consisting of a top portion (23), a first inner lateral portion (24) at least partly facing towards the second central axis (15) and a first outer lateral portion (25) at least partly facing outwards relative to the second central axis (15), the two first lateral portions (24), (25) being positioned laterally on opposite sides of the top portion (23), and the second lateral face (20) comprising, corresponding to, or being constituted of, the first outer lateral portion (25), and/or **in that** on the surface of said annular seat (19) there are three portions comprising a bottom portion (26), a second outer lateral portion (27) at least partly facing towards the second central axis (15) and a second inner lateral portion (28) at least partly facing outwards relative to the second central axis (15), the two second lateral portions (27), (28) being positioned laterally on opposite sides of said bottom portion (26) and the second lateral face (20) comprising, corresponding to, or being constituted of, the second inner lateral portion (28).

11. The system according to claim 10, respectively **characterised in that,** in the sealed configuration, the capsule holder (13) causes deformation of the projecting annular tooth (9) and movement of the tip portion (10) towards the first central axis (4), with consequent pressing of the first inner lateral face (11) onto the second lateral face (20).

12. The system according to claim 9, 10 or 11, **characterised in that** the annular edge (17) comprises both the projecting annular element (18) and the annular seat (19), and **in that,** in a radial section relative to the second central axis (15), the projecting annular element (18) and the annular seat (19) share the second lateral face (20).

13. The system according to claim 9, 10, 11 or 12, **characterised in that** in a radial section relative to the first central axis (4), the first inner lateral face (11) extends substantially straight along a first straight line forming a first acute angle with the first central axis (4), **in that** in a radial section relative to the second central axis (15), the second lateral face (20) extends substantially straight along a second straight line forming a second acute angle with the second central axis (15), and **in that** the first acute angle is greater than the second acute angle.

14. The system according to claim 13, **characterised in that** the first acute angle is greater than the second acute angle by no more than 10 degrees.

15. The system according to any one of claims 9 to 14, **characterised in that** it also comprises a contact element (29) on which, in the sealed configuration, the lid (8) of the capsule (2) can rest at least at the perimetric edge (7) and with which the collecting means are associated, and **in that** at least one out of said capsule holder (13) and said contact element (29) is movable relative to the other between an open configuration in which they are at a distance from one another and allow said capsule (2) to be inserted in the housing (14) through the infeed opening (16) and a closed configuration in which, with the capsule holder (13) and the capsule (2) in the sealed configuration, between them they close the perimetric edge (7) of the capsule (2) to form a watertight seal even between at least said perimetric edge (7) and the contact element (29).

## Patentansprüche

1. Eine Kapsel zur Herstellung von Getränken, die mindestens eine pulverförmige Lebensmittelsubstanz enthält, welche extrahiert werden kann, indem unter Druck stehendes Wasser durch sie hindurchgeführt wird, um ein Getränk herzustellen, wobei besagte Kapsel (2) Folgendes umfasst:
einen im Wesentlichen tassenförmigen Körper (3), welcher eine erste Mittenachse (4) hat, wobei besagter Körper (3) einen unteren Teil (5), eine Seitenwand (6), welche sich vom unteren Teil (5) aus erstreckt, und eine Außenkante (7) umfasst, welche mit einer Seite der Seitenwand (6) gegenüber vom unteren Teil (5) verbunden ist und sich von der Seitenwand (6) aus nach außen erstreckt; sowie
einen Deckel (8), der mit besagter Außenkante (7) verbunden ist, um die Oberseite des tassenförmigen Körpers (3) zu schließen;
an der Außenkante (7), auf einer Seite gegenüber derjenigen, mit der der Deckel (8) verbunden ist, befindet sich ein herausragender, ringförmiger Zahn (9), an dessen Oberfläche sich mindestens drei ringförmig in Bezug auf die erste Mittenachse (4) angeordnete Abschnitte befinden, besagte mindestens drei Abschnitte bestehen dabei aus einem Spitzenabschnitt (10), einer ersten inneren Seitenfläche (11), die zumindest teilweise zu ersten Mittenachse (4) gerichtet ist, und einer ersten äußeren Seitenfläche (12), die zumindest teilweise in Bezug auf die erste Mittenachse (4) nach außen gerichtet ist, die beiden ersten Seitenflächen (11), (12) sind dabei auf gegenüberliegenden Seiten des Spitzenabschnitts (10) positioniert;
wobei der herausragende, ringförmige Zahn (9) zumindest teilweise in Bezug auf die erste Mittenachse (4) verformbar ist, auf eine Art und Weise, dass der Spitzenabschnitt (10) seinen Abstand von der ersten Mittenachse (4) verändern kann, und wobei, in einem radial befindlichen Abschnitt in Bezug auf die Mittenachse und von der Außenkante (7) wegführend, sich die erste innere Seitenfläche (11) erstreckt, zumindest teilweise von der ersten Mittenachse (4) abweichend;
**gekennzeichnet dadurch, dass** die erste äußere Seitenfläche (12) sich in einem radialen Abschnitt zur Mittenachse und wegführend von der Außenkante (7) zumindest teilweise von der ersten Mittenachse (4) abweichend erstreckt, um die Verformbarkeit des herausragenden, ringförmigen Zahns (9) und die darauf folgende Bewegung des Spitzenabschnitts (10) in Bezug zur ersten Mittenachse (4) zu erleichtern.

2. Die Kapsel nach Patentanspruch 1, **gekennzeichnet dadurch, dass** sich besagte erste äußere Seitenfläche (12) entweder parallel zur ersten Mittenachse (4) oder abweichend von der ersten Mittenachse (4) von der Außenkante (7) wegführend, zumindest an einem Teil davon, der am Spitzenabschnitt (10) liegt, erstreckt.

3. Die Kapsel nach den Patentansprüchen 1 oder 2, **gekennzeichnet dadurch, dass** der herausragende ringförmige Zahn (9) zumindest teilweise elastisch verformbar ist.

4. Die Kapsel nach einem der vorherigen Patentansprüche, **gekennzeichnet dadurch, dass**, in einem radial zur Mittenachse liegenden Abschnitt, der herausragende ringförmige Zahn (9) eine längliche Form und eine maximale Dicke, die weniger als die Hälfte seiner eigenen Länge beträgt, hat.

5. Die Kapsel nach Patentanspruch 1, **gekennzeichnet dadurch, dass**, in einem radial zur Mittenachse liegenden Abschnitt und von der Außenkante (7) wegführend, die erste äußere Seitenfläche (12) sich zumindest teilweise abweichend von der ersten Mittenachse (4) erstreckt.

6. Die Kapsel nach Patentanspruch 5, **gekennzeichnet dadurch, dass**, in einem radial zur ersten Mittenachse (4) liegenden Abschnitt, sowohl die erste innere Seitenfläche (11) als auch die erste äußere Seitenfläche (12) sich im Wesentlichen gerade erstrecken, entlang jeweiliger gerader Linien, welche spitze Winkel zur ersten Mittenachse (4) bilden.

7. Die Kapsel nach Patentanspruch 6, **gekennzeichnet dadurch, dass** besagte jeweilige gerade Linien in Richtung des Spitzenabschnitts (10) miteinander konvergieren.

8. Die Kapsel nach einem der vorherigen Patentansprüche, **gekennzeichnet dadurch, dass** der herausragende ringförmige Zahn (9) zumindest teilweise in Bezug auf die erste Mittenachse (4) solcherart verformbar ist, dass der Spitzenabschnitt (10) sich in Richtung der ersten Mittenachse (4) bewegen kann.

9. Ein System zur Herstellung von Getränken, umfassend:
eine Kapsel (2) nach einem der vorherigen Patentansprüche; einen Kapselhalter (13), welcher in sich ein Gehäuse (14) bildet, um die Kapsel (2) unterzubringen und eine zweite Mittenachse (15) habend, besagter Kapselhalter (13) umfasst dabei eine Einführöffnung (16), durch welche die Kapsel (2) in besagtes Gehäuse (14) eingesetzt werden kann, besagte Einführöffnung (16) ist dabei an ihrem Außenumfang durch eine ringförmige Kante (17) des Kapselhalters (13) begrenzt, welche ein herausragendes ringförmiges Element (18) und/oder jeweils einen ringförmigen Sitz (19) umfasst, wobei das herausragende ringförmige Element (18) und/oder der ringförmige Sitz (19) seinerseits jeweils mindestens eine zweite Seitenfläche (20) umfasst, welche in Bezug auf die zweite Mittenachse (15) vorrangig nach außen gerichtet ist;
Einspritzmittel (30), die im Kapselhalter (13) montiert sind, um während des Gebrauchs unter Druck stehendes Wasser durch den unteren Teil (5) in die Kapsel (2) zu spritzen;
Sammelmittel, um während des Gebrauchs das Getränk aufzufangen, das durch den Deckel (8) der Kapsel (2) ausgegeben wird;
dabei sind besagter Kapselhalter (13) und besagte Kapsel (2) dazu imstande, eine abgedichtete Anordnung einzunehmen, bei der die erste Mittenachse (4) und die zweite Mittenachse (15) im Wesentlichen übereinstimmen und bei der besagte ringförmige Kante (17) in Kontakt mit besagter Kapsel (2) ist und mit einer wasserfesten Dichtung mit ihr verbunden wird;
dabei befindet sich die zweite Seitenfläche (20) in der abgedichteten Anordnung in abgedichtetem Kontakt mit der ersten inneren Seitenfläche (11) und der herausragende ringförmige Zahn (9) wird dabei in Bezug auf die erste Mittenachse (4) durch eine Wirkung verformt, die vom Kapselhalter (13) mithilfe der zweiten Seitenfläche (20) auf die erste innere Seitenfläche (11) ausgeübt wird, sodass der Spitzenabschnitt (10) seinen Abstand von der ersten Mittenachse (4) verändert.

10. Das System nach Patentanspruch 9, gekennzeichnet jeweils dadurch, dass sich an der Oberfläche des besagten herausragenden ringförmigen Elements (18) drei Bereiche befinden, welche aus einem oberen Teil (23), einem ersten inneren Seitenteil (24), der zumindest teilweise in Richtung der zweiten Mittenachse (15) zeigt, und einem ersten äußeren Seitenteil (25), der zumindest teilweise in Bezug auf die zweite Mittenachse (15) nach außen zeigt, bestehen, dabei sind die ersten zwei Seitenteile (24), (25) seitlich an gegenüberliegenden Seiten des oberen Teils (23) positioniert,
und dabei umfasst, entspricht oder besteht die zweite Seitenfläche (20) aus dem ersten äußeren Seitenteil (25), und/oder dadurch, dass an der Oberfläche des besagten ringförmigen Sitzes (19) drei Bereiche sind, welche einen Bodenteil (26), einen zweiten äußeren Seitenteil (27), der zumindest teilweise zur zweiten Mittenachse (15) zeigt, und einen zweiten inneren Seitenteil (28), der zumindest teilweise von der zweiten Mittenachse (15) nach außen zeigt, umfassen, die beiden zweiten Seitenteile (27), (28) sind dabei seitlich an gegenüberliegenden Seiten des besagten Bodenteils (26) positioniert und die zweite Seitenfläche (20) umfasst, entspricht oder besteht aus dem zweiten inneren Seitenteil (28).

11. Das System nach Patentanspruch 10, jeweils **dadurch gekennzeichnet, dass** der Kapselhalter (13) in der abgedichteten Anordnung eine Verformung des herausragenden ringförmigen Zahns (9) und eine Bewegung des Spitzenabschnitts (10) in Richtung der ersten Mittenachse (4) hervorruft, woraufhin die erste innere Seitenfläche (11) auf die zweite innere Seitenfläche (20) drückt.

12. Das System nach den Patentansprüchen 9, 10 oder 11, **gekennzeichnet dadurch, dass** die ringförmige Kante (17) sowohl das herausragende ringförmige Element (18) als auch den ringförmigen Sitz (19) umfasst und dadurch, dass, in einem radial zur zweiten Mittenachse (15) liegenden Abschnitt, das herausragende ringförmige Element (18) und der ringförmigen Sitz (19) die zweite Seitenfläche (20) teilen.

13. Das System nach den Patentansprüchen 9, 10, 11 oder 12, **gekennzeichnet dadurch, dass** in einem radial zur ersten Mittenachse (4) liegenden Abschnitt sich die erste innere Seitenfläche (11) im Wesentlichen gerade auf einer ersten geraden Linie erstreckt, welche einen ersten spitzen Winkel mit der ersten Mittenachse (4) bildet, dadurch, dass in einem radial zur zweiten Mittenachse (15) liegenden Abschnitt sich die zweite Seitenfläche (20) im Wesentlichen gerade auf einer zweiten geraden Linie erstreckt, welche einen zweiten spitzen Winkel mit der zweiten Mittenachse (15) bildet, und dadurch, dass der erste spitze Winkel größer als der zweite spitze Winkel ist.

14. Das System nach Patentanspruch 13, **gekennzeichnet dadurch, dass** der erste spitze Winkel nicht mehr als 10 Grad größer als der zweite spitze Winkel ist.

15. Das System nach jedem der vorherigen Patentansprüche 9 bis 14, **gekennzeichnet dadurch, dass** es auch ein Kontaktelement (29) umfasst, auf dem der Deckel (8) der Kapsel (2) in der abgedichteten Anordnung zumindest an der Außenkante (7) aufliegen kann und mit dem die Sammelmittel verbunden sind, und dadurch, dass mindestens eines der Elemente besagter Kapselhalters (13) und besagtes Kontaktelement (29) in Bezug auf das andere beweglich ist, zwischen einer offenen Anordnung, in der sie entfernt voneinander sind und es besagter Kapsel (2) erlauben, durch die Einführöffnung (16) in das Gehäuse (14) eingesetzt zu werden, und einer geschlossenen Anordnung, in der sie, wenn sich der Kapselhalter (13) und die Kapsel (2) in der abgedichteten Anordnung befinden, zusammen die Außenkante (7) der Kapsel (2) abschließen, um eine wasserfeste Dichtung sogar zwischen besagter Außenkante (7) und dem Kontaktelement (29) zu bilden.

## Revendications

1. Une capsule pour la préparation de boissons, contenant au moins une substance alimentaire en poudre qui peut être extraite par passage d'eau sous pression à travers elle pour réaliser une boisson, ladite capsule (2) comprenant :
un corps essentiellement en forme de godet (3) ayant un premier axe central (4), ledit corps (3) comprenant une portion inférieure (5), une paroi latérale (6) s'étendant à partir de la portion inférieure (5), et un bord périmétrique (7) raccordé à un côté de la paroi latérale (6) opposé à la portion inférieure (5) et dépassant vers l'extérieur de la paroi latérale (6) ; et
un couvercle (8) associé audit bord périmétrique (7) pour fermer le dessus du corps en forme de godet (3) ;
au niveau du bord périmétrique (7), sur un côté opposé à celui où est associé le couvercle (8), une dent annulaire en saillie (9) est présente, sur la surface de laquelle il y a au moins trois portions disposées de façon annulaire par rapport au premier axe central (4), lesdites au moins trois portions consistant en une portion en pointe (10), une première face latérale intérieure (11) au moins partiellement orientée vers le premier axe central (4) et une première face latérale extérieure (12) au moins partiellement orientée vers l'extérieur par rapport au premier axe central (4), les deux premières faces latérales (11), (12) étant positionnées sur des côtés opposés de la portion en pointe (10) ;
où la dent annulaire en saillie (9) est au moins partiellement déformable par rapport au premier axe central (4) de manière à ce que la portion en pointe (10) puisse varier sa distance par rapport au premier axe central (4), et où, en coupe radiale par rapport à l'axe central et en s'éloignant du bord périmétrique (7), la première face latérale intérieure (11) s'étend au moins partiellement divergente par rapport au premier axe central (4) ;
**caractérisée en ce que** la première face latérale extérieure (12) s'étend, en coupe radiale par rapport à l'axe central et en s'éloignant du bord périmétrique (7), au moins partiellement divergente par rapport au premier axe central (4) pour favoriser la déformabilité de la dent annulaire en saillie (9) et le mouvement conséquent de la portion en pointe (10) par rapport au premier axe central (4).

2. La capsule selon la revendication 1, **caractérisée en ce que** ladite première face latérale extérieure (12) s'étend soit parallèle au premier axe central (4) soit divergente par rapport au premier axe central (4) en s'éloignant du bord périmétrique (7), au moins au niveau d'une partie respective qui est adjacente à la portion en pointe (10).

3. La capsule selon la revendication 1 ou 2, **caractérisée en ce que** la dent annulaire en saillie (9) est au moins partiellement déformable élastiquement.

4. La capsule selon l'une quelconque des revendications précédentes, **caractérisée en ce que**, en coupe radiale par rapport à l'axe central, la dent annulaire en saillie (9) a une forme allongée et une épaisseur maximum qui est inférieure à la moitié de sa propre longueur.

5. La capsule selon la revendication 1, **caractérisée en ce que**, en coupe radiale par rapport à l'axe central et en s'éloignant du bord périmétrique (7), la première face latérale extérieure (12) s'étend au moins partiellement divergente par rapport au premier axe central (4).

6. La capsule selon la revendication 5, **caractérisée en ce que**, en coupe radiale par rapport au premier axe central (4), à la fois la première face latérale intérieure (11) et la première face latérale extérieure (12) s'étendent essentiellement de façon rectiligne, le long de droites respectives qui forment des angles aigus avec le premier axe central (4).

7. La capsule selon la revendication 6, **caractérisée en ce que** lesdites droites respectives convergent l'une avec l'autre vers la portion en pointe (10).

8. La capsule selon l'une quelconque des revendications précédentes, **caractérisée en ce que** la dent annulaire en saillie (9) est au moins partiellement déformable par rapport au premier axe central (4) de manière à ce que la portion en pointe (10) puisse se déplacer vers le premier axe central (4).

9. Un système pour la préparation de boissons comprenant :
une capsule (2) selon l'une quelconque des revendications précédentes ;
un support de capsule (13) formant un logement (14) à l'intérieur de lui-même pour loger la capsule (2) et ayant un deuxième axe central (15), ledit support de capsule (13) comprenant une ouverture d'entrée (16) à travers laquelle la capsule (2) peut être introduite dans ledit logement (14), ladite ouverture d'entrée (16) étant délimitée au niveau de son périmètre par un bord annulaire (17) du support de capsule (13) comprenant un élément annulaire en saillie (18) et/ou respectivement un siège annulaire (19), respectivement l'élément annulaire en saillie (18) et/ou le siège annulaire (19) comprenant à leur tour au moins une deuxième face latérale (20) principalement orientée vers l'extérieur par rapport au deuxième axe central (15) ;
des moyens d'injection (30) montés dans le support de capsule (13) pour, durant l'utilisation, injecter de l'eau sous pression dans la capsule (2) à travers la portion inférieure (5) ;
des moyens de collecte pour, durant l'utilisation, collecter la boisson distribuée à travers le couvercle (8) de la capsule (2) ;
ledit support de capsule (13) et ladite capsule (2) pouvant prendre une configuration étanche dans laquelle le premier axe central (4) et le deuxième axe central (15) coïncident essentiellement et dans laquelle ledit bord annulaire (17) est en contact avec ladite capsule (2) et est accouplé avec celle-ci de façon étanche à l'eau ;
dans la configuration étanche, la deuxième face latérale (20) étant en contact étanche avec la première face latérale intérieure (11) et la dent annulaire en saillie (9) étant déformée par rapport au premier axe central (4) par une action appliquée par le support de capsule (13) au moyen de la deuxième face latérale (20) sur la première face latérale intérieure (11), de manière à ce que la portion en pointe (10) ait modifié sa distance du premier axe central (4).

10. Le système selon la revendication 9, respectivement **caractérisé en ce que**, sur la surface dudit élément annulaire en saillie (18), il y a trois portions consistant en une portion en pointe (23), une première portion latérale intérieure (24) au moins partiellement orientée vers le deuxième axe central (15) et une première portion latérale extérieure (25) au moins partiellement orientée vers l'extérieur par rapport au deuxième axe central (15), les deux premières portions latérales (24), (25) étant positionnées latéralement sur des côtés opposés de la portion en pointe (23), et la deuxième face latérale (20) comprenant, correspondant à, ou étant constituée de, la première portion latérale extérieure (25), et/ou **en ce que**, sur la surface dudit siège annulaire (19), il y a trois portions comprenant une portion de fond (26), une deuxième portion latérale extérieure (27) au moins partiellement orientée vers le deuxième axe central (15) et une deuxième portion latérale intérieure (28) au moins partiellement orientée vers l'extérieur par rapport au deuxième axe central (15), les deux deuxièmes portions latérales (27), (28) étant positionnées latéralement sur des côtés opposés de ladite portion de fond (26) et la deuxième face latérale (20) comprenant, correspondant à, ou étant constituée de, la deuxième portion latérale intérieure (28).

11. Le système selon la revendication 10, respectivement **caractérisé en ce que**, dans la configuration étanche, le support de capsule (13) cause la déformation de la dent annulaire en saillie (9) et le mouvement de la portion en pointe (10) vers le premier axe central (4), avec pression conséquente de la première face latérale intérieure (11) sur la deuxième face latérale (20).

12. Le système selon la revendication 9, 10 ou 11, **caractérisé en ce que** le bord annulaire (17) comprend à la fois l'élément annulaire en saillie (18) et le siège annulaire (19), et **en ce que**, en coupe radiale par rapport au deuxième axe central (15), l'élément annulaire en saillie (18) et le siège annulaire (19) ont en commun la deuxième face latérale (20).

13. Le système selon la revendication 9, 10, 11 ou 12, **caractérisé en ce que**, en coupe radiale par rapport au premier axe central (4), la première face latérale intérieure (11) s'étend essentiellement de façon rectiligne le long d'une première droite formant un premier angle aigu avec le premier axe central (4), **en ce que**, en coupe radiale par rapport au deuxième axe central (15), la deuxième face latérale (20) s'étend essentiellement de façon rectiligne le long d'une deuxième droite formant un deuxième angle aigu avec le deuxième axe central (15), et **en ce que** le premier angle aigu est supérieur au deuxième angle aigu.

14. Le système selon la revendication 13, **caractérisé en ce que** le premier angle aigu est supérieur au deuxième angle aigu de pas plus de 10 degrés.

15. Le système selon l'une quelconque des revendications de 9 à 14, **caractérisé en ce qu'**il comprend aussi un élément de contact (29) sur lequel, dans la configuration étanche, le couvercle (8) de la capsule (2) peut reposer au moins au niveau du bord périmétrique (7) et avec lequel les moyens de collecte sont associés, et **en ce que** au moins l'un entre ledit support de capsule (13) et ledit élément de contact (29) est mobile par rapport à l'autre entre une configuration ouverte dans laquelle ils sont espacés l'un de l'autre et permettent l'introduction de ladite capsule (2) dans le logement (14) à travers l'ouverture d'entrée (16) et une configuration fermée dans laquelle, avec le support de capsule (13) et la capsule (2) dans la configuration étanche, ils ferment entre eux le bord périmétrique (7) de la capsule (2) pour former un joint étanche à l'eau même entre au moins ledit bord périmétrique (7) et l'élément de contact (29).
